# EUROPEAN PATENT APPLICATION

(11) **EP 4 201 975 A1**
(43) Date of publication of application: **28.06.2023**
(21) Application number: 21956971.2
(22) Date of filing: 22.09.2021
(51) Int. Cl.: C08G 18/64, C08G 18/61, C09D 5/14, C09D 175/02, C09D 5/16, C09D 5/08, C08G 18/48

(54) **POLYASPARTIC POLYUREA RESIN SYSTEM HAVING MARINE ANTIFOULING FUNCTION AND COATING COMPOSITION**

(30) Priority: 15.09.2021 CN 202111083499
(71) Applicant: Suzhou Institute of Nano-tech and Nano-bionics (SINANO) Chinese Academy of Sciences, Suzhou, Jiangsu 215125 (CN)
(72) Inventor: AN, Xiaowei, Suzhou, Jiangsu 215123 (CN); WEI, Chunyang, Suzhou, Jiangsu 215123 (CN); TANG, Jiyun, Suzhou, Jiangsu 215123 (CN); LI, Zongkui, Suzhou, Jiangsu 215123 (CN)
(74) Representative: Bayramoglu et al.
(86) International application number: PCT/CN2021/119528
(87) International publication number: WO 2023/039917

(57) **Abstract**

The present application discloses an asparagus polyurea resin (binder) system having a marine antifouling function and a paint composition. The asparagus polyurea resin system comprises a polymer having a structure represented by the following formula: 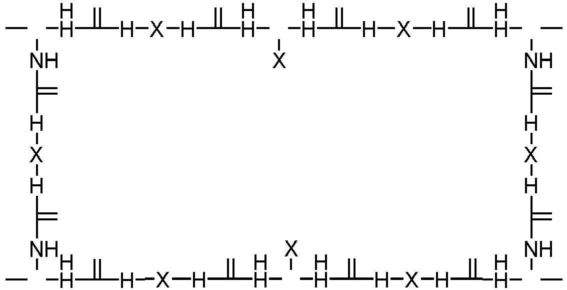 wherein, X is derived from polyaspartate, Y is derived from an isocyanate curing agent, and R is a group having an antibacterial and antifouling function. The asparagus polyurea resin system of the present application simultaneously has the characteristics of high mechanical strength, low surface energy, good antibacterialproperty and the like, a coating formed of the asparagus polyurea resin system has good antifouling effect, good wearing resistance, good impact resistance, good corrosion resistance, good material wettability, high adhesion and other advantages, can be applied to offshore ships, offshore engineering platforms, submarine cables, water pipelines of nuclear power plants and the like on large scale, and has an extremely high practical application value.

## Description

### CROSS REFERENCE TO RELATED APPLICATION

This patent application claims the benefit and priority of Chinese Patent Application No. 202111083499.3 filed on September 15, 2021 and entitled "ASPARAGUS POLYUREA RESIN SYSTEM HAVING MARINEANTIFOULING FUNCTION AND PAINT COMPOSITE", the disclosure of which is incorporated by reference herein in its entirety as part of the present application.

### TECHNICAL FIELD

The present application relates to paint, particularly to an asparagus polyurea resin (binder) system having a marine antifouling function and a paint composite, belonging to the technical fields of functional polymer resin and functional paint.

### BACKGROUND

Marine fouling can increase the fuel consumption of ships, block the water pipelines of nuclear power plants, accelerate the corrosion of metal surfaces and generate other serious problems. A marine antifouling material, as a first line of defense for protecting marine equipment from being corroded by marine organisms, is an important guarantee for ensuring that the marine development and utilization activities of human are smoothly conducted.

Human beings have been fighting against the attachment of marine organisms for a long time. In the 1960s, a tributyltin (TBT) coating with broad-spectrum antifouling ability was developed. However, TBT is severely toxic to non-target organisms, and had been completely banned in 2008. Currently, the typical antifouling coating is tin-free self-polishing paint in which organic tin is replaced with copper, zinc and others, but a copper-containing coating is only specific to some attachments, and therefore antifouling enhancing agents such as Irgarol 1051, pyridinethione copper and isothiazolinone must be added to make up the defect. However, these technologies can still release antifouling agents, which can bring pollution to marine environment. Furthermore, a layer is formed on the surface of the coating film due to the release of the antifouling agents so that the surface of the coating film becomes rough, which is not conducive to reducing resistance and saving energy.

In recent years, non-toxic and pollution-free antifouling coatings draw more and more attention. A low-surface-energy antifouling material has a hydrophobic structure, and can form a super-hydrophobic layer on its surface, so that marine organisms cannot be attached or not firmly attached on the surface of the material to be fall off under the action of water current during the sailing of ships, thereby achieving the antifouling effect. However, regardless of a silicone resin or an organic fluorine resin, the coating is poor in surface scraping resistance and relatively expensive in price, and is not conducive to large-scale applications. In addition, since there are various types of marine organisms, an organic fluorosilicone coating is difficult to achieve broad-spectrum antifouling effect. Especially, for some diatoms, bacteria C. marina, ulva spores, aeruginosa, etc., the larger (more hydrophobic) the contact angle of the surface is, the more serious the attachment is.

Polyurea paint has excellent mechanical properties, and is outstanding in the aspects of wearing resistance, impact resistance, corrosion resistance, medium resistance, thermal stability and the like, so that it has a wide application in the anti-corrosion, waterproof, wear-resistant, damping protection and other fields. Compared with the traditional environment-friendly coating technology, modified polyurea paint is a novel marine antifouling paint with great application prospects.

In recent years, more and more attention is paid to the third-generation polyurea-polyaspartate polyurea. It is mainly formed by mixing multiple components such as modified isocyanatepre polymer and polyaspartate resin. The polyaspartate resin is a secondary amine compound, having a unique steric effect to reduce reactivity which is much lower than that of the ordinary aliphatic amine resin, significantly improving its wettability and adhesion to a substrate. But, based on matured commercially available aspartic polyurea, it is still a great challenge on how to construct a polyaspartateresin antifouling system from a molecule level and give the system more excellent antibacterial property, low surface energy, high mechanical strength and the like to perform better marine fouling protection.

### SUMMARY

The main objective of the present application is to provide an asparagus polyurea resin system having a marine antifouling function, a paint composition and use thereof to overcome the defects existing in the prior art.

In order to realize the above objective, the present application adopts the following technical solution.

The embodiments of the present application provide an asparagus polyurea resin system having a marine antifouling function, comprising a polymer having a structure represented by the following formula: 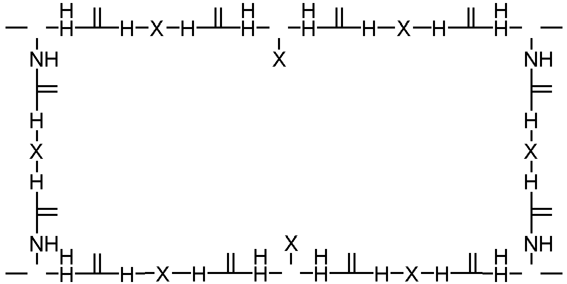 wherein, X is derived from polyaspartate, Y is derived from an isocyanate curing agent, and R is a group having an antibacterial and antifouling function.

The embodiments of the present application provide an asparagus polyurea resin system having a marine antifouling function, which is mainly formed by reaction of a polyaspartate resin, an organic antifouling agent, a polyether, polyisocyanateand a silicone resin.

The embodiments of the present application also provide a paint composite, comprising the raw materials: a polyaspartate resin, an organic antifouling agent, a polyether,polyisocyanate and a silicone resin, etc.

The embodiments of the present application also provide a method for preparing a paint composition, comprising:
preparing raw materials according to raw material compositions of any one paint composition of the present application; and
mixing polyaspartate with a silicone resin and then reacting the obtained mixture at a certain temperature in an protective atmosphere, subsequently, evenly mixing the obtained reaction product with other raw materials to form the paint composition.

The embodiments of the present application also provide the paint composition prepared by any one method of the present application.

The embodiments of the present application also provide a coating formed by the paint composition of the present application.

Compared with the prior art, the technical solutions of the embodiments of the present application at least have the following advantages:
(1) the asparagus polyurea resin system having the marine antifouling function simultaneously has the advantages of low surface energy, good antibacterial property and the like, not only is extremely excellent in good antifouling effect and corrosion-resisting property but also has good mechanical properties such as wearing resistance and impact resistance, is environmental-friendly, and has a wide application prospect;
(2) the paint provided can be solvent-free, i.e., has 100% solid content, is safe, environmental-friendly and odor-free, can be quickly cured, can be sprayed and formed on any curved surfaces, inclined surfaces and vertical surfaces without sagging;
(3) the coating formed by the paint is compact, seamless and flexible, and has excellent antifouling effect, impact resistance, wear resistance, corrosion resistance and chemical medium resistance (such as acid, alkali and salt) and meanwhile has excellent seawater immersion resistance, good shock absorption performance, excellent temperature change resistance, good wettability and strong adhesion to the substrate, and can be quickly bonded to steel, concrete and other substrates, is suitable for use in offshore ships, offshore platforms, water pipelines of nuclear power plants, and other facilities on large scale, and has high practical application values.

### BRIEF DESCRIPTION OF THE DRAWINGS

Fig. 1 is aninfrared spectrogram of a unmodifiedpolyureaPUA coating prepared in comparative example 1;
Fig. 2 is aninfrared spectrogram of a fluorosilicone modified polyureaPUA-FSi coating prepared in comparative example 2;
Fig. 3 is aninfrared spectrogram of an organic antifouling agent-containing polyureaPUA-FSi-N coating prepared in example 1;
Fig. 4 is a water contact angle picture of a unmodifiedpolyureaPUA coating prepared in comparative example 1;
Fig. 5 is a water contact angle picture of a fluorosilicone modified polyureaPUA-FSi coating prepared in comparative example 2;
Fig. 6 is a water contact angle picture of an organic antifouling agent-containing polyureaPUA-FSi-N coating prepared in example 1;
Fig. 7 is a water contact angle picture of an organic silicon antifouling coating (PDMS) formed by a commercially available organic silicon antifouling paint.
Fig. 8 is a diagram showing water contact angle comparisonof PUA, PUA-FSi, PUA-FSi-N coating prepared in comparative examples 1 and 2 and example 1 and a PDMS coating;
Fig. 9 is a diagram showing adhesion comparison of PUA, PUA-FSi, PUA-FSi-N coatings prepared in comparative examples 1 and 2 and example 1 and an epoxy primer;
Fig. 10 isa stress-strain curve of PUA, PUA-FSi, PUA-FSi-N coatings prepared in comparative examples 1 and 2 and example 1 and a PDMS coating; and
Fig. 11 is a diagram showingYong's modulus comparison of PUA, PUA-FSi, PUA-FSi-N coatings prepared in comparative examples 1 and 2 and example 1 and a PDMS coating.

### DETAILED DESCRIPTION OF THE EMBODIMENTS

As described above, in view of many defects in the prior art, the technical solution of the present application is proposed by the inventors of this case through long-term research and practice, and will be described in detail.

One aspect of the present application provides an asparagus polyurea resin system having a marine antifouling function, which has the following structure: 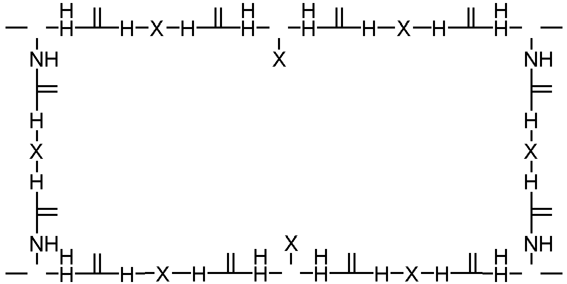 wherein, X is derived from polyaspartate, Y is derived from an isocyanate curing agent, and R is a group having an antibacterial and antifouling function.

Another aspect of the present application also provides a method for preparing an asparagus polyurea resin system having a marine antifouling function, comprising: mixing polyisocyanate with a silicone resin, andcarrying out first reaction on the obtained mixture at 0-80°C in a protective atmosphere (for example, nitrogen atmosphere), subsequentlymixing the obtained reaction product with a polyaspartate resin, an organic antifouling agent and polyether, and carrying out second reaction on the obtained mixture at 0-50°C to obtain a target product. The mechanism of thisreaction is as follows:

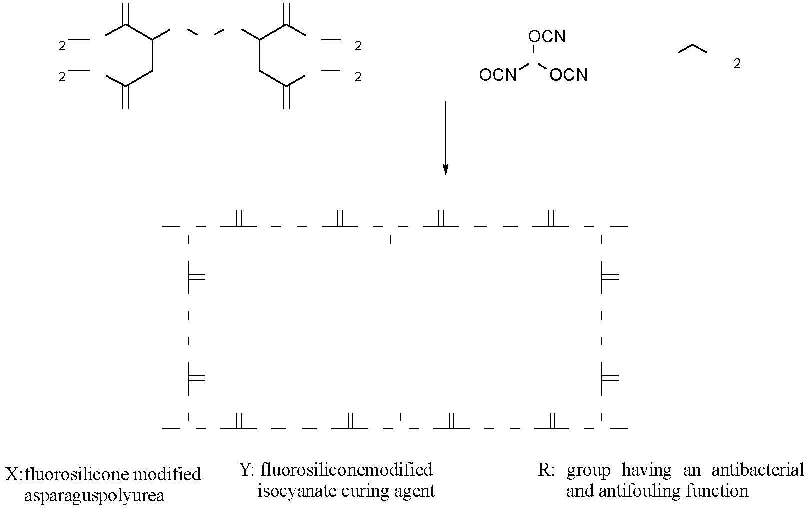

Further, a mass ratio of polyisocyanate to silicone resin is 0-80:20-100, preferably 30-60:40-70.

Further, a mass ratio of polyaspartate resin to organic antifouling agent to polyether is 0-80: 0-50:0-50, preferably 30-60:10-30:10-30.

Further, a ratio of the total mass of the polyaspartate resin,the organic antifouling agent and the polyether to the mass of a first reaction product is 1:0-10, preferably 1:0.5-2.

It should be noted that the amounts of the polyaspartate resin, the organic antifouling agent and the polyether are all more than 0.

Further, the first reactiontime and the second reaction time are both more than 0 but less than 24 h, preferably 3-12 h.

Further, the temperature of the first reaction is preferably 20-60°C.

Further, the temperature of the second reaction is preferably 10-40°C.

The asparagus polyurea resin system of the present application is preferably formed by reacting fluorosilicone modified polyaspartate resin, an organic antifouling agent, polyether, polyisocyanate and a silicone resin, which not only simultaneouslyhas the advantages of an asparaguspolyurea resin system, asilicone polymer, a quaternary ammonium salt and polyether and can realize cooperative fouling prevention based on its own characteristics such as low surfaceenergy and good antibacterial property, but also surprisingly exhibits excellent corrosion resistance, wearing resistance and impact resistance, has strong adhesion, and can be quickly bonded to steel and concrete substrates.

Another aspect of the present application also provides an antifouling structure comprising the asparagus polyurea resin system having the marine antifouling function.

Further, the antifouling structure can be a single-layer coating or a multi-layer coating, one of them can mainly consist of the asparagus polyurea resin system having the marine antifouling function.

By forming the antifouling structure on the surface of the substrate, the substrate can be well protected, especially a good antifouling effect is achieved. The substrate can be made of multiple materials, such as metal, concrete, wood, polymers or other composites, but is not limited thereto.

Another aspect of the present application also provides a paint composition, comprising any one asparagus polyurea resin system described above.

In some embodiments, the asparagus polyurea resin system accounts for 0.5%-99% of the dry film weight of the paint composition.

Alternatively, in some embodiments, the weight sum of the asparagus polyurea resin system and one or more antifouling agents accounts for 0.5%-99% of the dry film weight of the paint composite. The antifouling described herein comprisesan organic antifouling agent, an inorganic antifouling agent or a combination thereof, for example metal-dithiocarbamate, copper acrylate, a metal antimicrobial agent, a metal salt, a heterocyclic nitride, a urea derivative, amide or imide of carboxylic acid, sulfonic acid and hyposulfonic acid, a salt or ester of carboxylic acid, substituted benzene, a guanidine derivative, a butyric acid lactone derivative, an imidazole containing compound, etc.

In some embodiments, the paint composition is a solvent-free system.

Another aspect of the presentapplication also provides a paint composition, comprising the raw materials: a polyaspartate resin, an organic antifouling agent, polyether, polyisocyanate and silicone resin, and further comprising components which can be added or not added, such as fillers and additives.

In some embodiments, the paint composition is the solvent-free system.

In some embodiments, the paint composition comprises the following raw materials: 0-80 parts by weight of polyaspartateresin, 0-50 parts by weight of organic antifouling agent, 0-50 parts by weight of polyether, 0-80 parts by weight of silicone resin and 20-100 parts by weight of polyisocyanate; wherein, the amounts of the polyaspartateresin, the polyether and the silicone resin are all more than 0.

In some embodiments, the paint composition comprises:
a first component comprising a polyaspartateresin,an organic antifouling agent, polyether, and components which can be added or not added (such as fillers and additives); and
a second component comprising polyisocyanate and a silicone resin.

In some embodiments, the first component comprises 0-80 parts by weight of polyaspartateresin,0-50 parts by weight of organic antifouling agent and 0-50 parts by weight of polyether.

In some embodiments, the second component comprises 0-80 parts by weight of silicone resin and 20-100 parts by weight of polyisocyanate.

In some embodiments, a mass ratio of the first component to the second component is 1:0-10, wherein the amount of the second component is more than 0.

Wherein, the amounts of the polyaspartateresin, the organic antifouling agent, the polyether and the silicone resin are all more than 0.

Preferably, the first component comprises 30-60 parts by weight of polyaspartateresin,10-30 parts by weight of organic antifouling agent and 10-30 parts by weight of polyether.

Preferably, the second component comprises 30-60 parts by weight of polyisocyanate and 40-70parts by weight of silicone resin.

Preferably, a mass ratio of the first component to the second component is 1:0.5-2.

In some embodiments, the polyaspartateresin has the following structure: 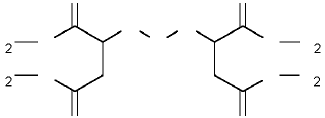 wherein, R₁ is an aliphatic group with a carbon number being greater than 0 and less than or equal to 100, R₂ is fluorine-containing hydrocarbylor silicon-containing hydrocarbyl with a carbon number being greater than 0 and less than or equal to 100.

Further, the polyaspartateresin comprises a combination of any one or more of a polyaspartate resin, a fluorine-containing polyaspartate resin, a silicon-containing polyaspartate resin and afluorosilicone-containing modified polyaspartate resin, but is not limited thereto. One of the modified polyaspartateresins can be generated by the following reaction:

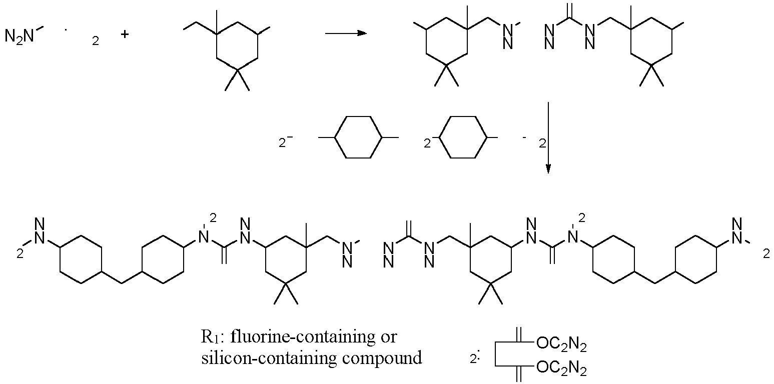

Further, the organic antifouling agent comprises a combiantion of any one or more of 4-bromo-2-(4-chlorophenyl)-5-(trifluoromethyl)-1H pyrrole-3-carbonitrile, 4-bromo-2-(4-chlorophenyl)-5-(trifluoromethyl)-1H pyrrole-3-carbonitrile derivatives, N-(2,4,6-trichlorophenyl) maleimide, pyridinethione copper, pyridinethione zinc, metomidine, metomidine derivatives, butyrolactone, butyrolactone derivatives, alkyl dimethyl benzyl quaternary ammonium salt, trimethoxysilylpropyl-N,N, N-trimethylammonium chloride, tetradecyl dimethyl (3-trimethoxysilylpropyl) ammonium chloride, octadecyl dimethyl (3-trimethoxysilylpropyl) ammonium chloride, di(hydroxyethyl) methyldodecyl ammonium chloride, di(2-hydroxyethyl) methyltetradecyl chloride quaternary ammonium salts and di(2-hydroxyethyl) methyltetradecyl chloride quaternary ammonium salts, but is not limited thereto.

Further, the polyether comprises a combiantion of any one or more of polyethylene glycol, polyethylene glycol monomethyl ether, polyethylene glycol) methyl ether amine, polypropylene glycol, polypropylene glycol monomethyl ether and polyether amine, but is not limited thereto.

In some embodiments, the first componnet also comprises a combiantion of any one or more of a filler and an additive.

Further, the first component also comprises 0-50 parts by weight of filler and 0-20 parts by weight of additive.

Further, the filler comprises a combiantion of any one or more of iron yellow, barium sulfate, titanium dioxide, micro-silicon powder, talc powder and heavy calcium carbonate, but is not limited thereto.

Further, the additive comprises a combiantion of any one or more of a leveling agent, a defoamer, a dispersant, a thickener, a coupling agent and activated powder, but is not limited thereto.

In some embodiments, the silicone resin includes but is not limited to a combiantion of any one or more of the following compounds: 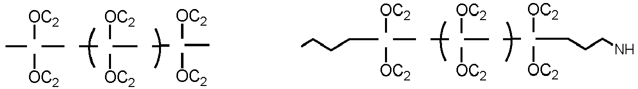 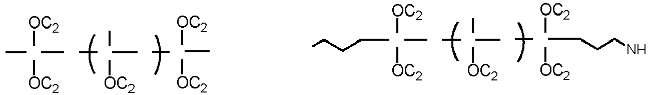 wherein, n is 10-1000.

In some embodiments, the polyisocyanate comprises a combiantion of any one or more of a hexamethylene diisocyanate trimer, a fluorosilicone modified hexamethylene diisocyanate trimer, L-lysine triisocyanate, fluorosilicone modified L-lysine triisocyanate, triphenylmethane triisocyanate and fluorosilicone modified triphenylmethane triisocyanate, but is not limited thereto.

Another aspect of the present application also provides a method for preparing a paint composition, comprising:
preparing raw materials according to raw material compositions of the paint composition; and
mixing polyisocyanate with a silicone resin and reacting the obtained mixture for 0-24 h at 0-80°C in a protective atmosphere (for example nitrogen atmosphere), and then evenly mixing the above reaction product with other raw materials at 0-50°C to form the paint composition.

In some embodiments, the paint composition adopts dual-componnet design, that is, comprising the first component and second componnet described above. Correspondingly, the preparation method comprises:
preparing raw materials according to raw material compositions of the paint composition;
evenly mixing all substances constituting the first component to form the first component;
mixing polyisocyanate with a silicone resin, and reacting the obtained mixture for 0-24 h at 0-80°C in a protective atmosphere (for example nitrogen atmosphere) to form a second component; and
evenly mixing the first component with the second component at 0-50°C to form the paint composition.

The paint composition can be solvent-free, i.e., has 100% solid content, is safe, environmental-friendly and odor-free, can be quickly cured, can be sprayed and formed on any curved surfaces, inclined surfaces and vertical surfaces without sagging.

Another aspect of the present application provides a coating formed by the paint composition. The coating is compact, seamless and flexible, has excellent antifouling effect, impact resistance, wear resistance, corrosion resistance and chemical medium resistance (such as acid, alkali and salt),as well as excellent seawater immersion resistance, good shock absorption performance, excellent temperature change resistance, good wettability and strong adhesion to the substrate, and can be quickly bonded to steel and concrete substrates.

Another aspect of the present application provides a method for preparing a coating, comprising: the paint composition is coated onto the surface of a substrate and then dried, so as to form the coating, wherein the paint can be coated onto the surface of the substrate by the application methods of brushing, rolling, spraying, printing or other manners, and the substrate can be made of metal, concrete, wood, polymer or other composites.

The coating of the present application has the advanatages of good antifouling effect, wearing resistance, impact resistance, corrosion resistance, good substrate wettability, high adhesion and the like, can be used for devices or equipment such as offshore ships, offshore platforms and water transmission pipelines of nuclear power plants on large scale, and acquires long-term and excellent antifouling, anti-corrosion, wearing-resistant, corrosion-resistant, impact-resistant, damping, temperature change resistance effects.

For more clearly understanding the objective, technical solution and advantages of the present application, the present application will be further illustrated in combination with embodiments. It should be noted that embodiments do not limit the protective range of the present application. In addition, unless otherwise specified, various raw materials used in the following embodiments can be purchased from the market or self-made according to reference books in the art, and various production and testing equipment used are also known in the art.

The sources of some raw materials used in the following examples and comparative examples are as follows:
Dispersant GA264, Zhongshan Wusi Chemical Co., Ltd;
Pigment 4920 iron yellow, Lanxess chemical (China) Co., Ltd;
Filler 1250-mesh barium sulfate, Shanghai Kaiyin Chemical Co., Ltd;
Anti-sagging agent H15, Wacker chemical (China) Co., Ltd;
Dehydration agent A3 powder, Zhengzhou Fulong New Material Technology Co., Ltd;
Defoamer BYK085, BYK Additives (Shanghai) Co., Ltd.;
Leveling agent TEGO Glide 450, Evonik Industries;
Silane coupling agent KH560, Shandong Qufu Chenguang Chemical Co., Ltd;
Rheological additive BYK410, BYK Additives (Shanghai) Co., Ltd.
Light stabilizers 1130 and 292, BASF (China) Co., Ltd;
Dehydration agent BF-5, Perstorp Holding AB;
Adhesion promoter GB950-90, Shenzhen Feiyang Junyan New Material Co., Ltd.

Of course, other raw materials litsed in the specification can be replaced with the above-metioned various raw materials.

Test methods used in the following examples are as follows:
(1) the curing degree of the raw material and the coating in the example is tested by using the Fourier micro infrared spectrometer (Nicolet iN10) of Nicolet Instrument Co. U.S.A;
(2) the water contact angle of the coating is tested with the video optical contact angle measuring instrument (OCA15EC) of German dataphysics company;
(3) the mechanical properties of the coating are tested with a material test machine (Instron 3365).

**Comparative example 1** A method for preparing apolyaspartatepolyurea coating comprises:
(1) preparation of component Aof paint: 42 parts by weight of polyaspartate resin (Nanjing Lanfeng New Material Technology Co., Ltd), 2 parts by weight of dispersant, 10 parts by weight of pigment, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min (high-speed dispersion refers to a dispersion speed being more than 1500 r/min, the same below), then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A, 1 part by weight of light stabilizer B and 6 parts by weight of solvent butyl acetate were further added and then underwent high-speed dispersion for 10 min;
(2) preparation of component B of paint: 9.5 parts by weight of solvent butyl acetate, 0.5 part by weight of dehydrating agent, 76.5 parts by weight of hexamethylenediisocyanatetrimer (Wanhua Chemical Group Co., Ltd) and 13.5 parts by weight of adhesion promoter were mixed at room temperature and then underwent high-speed dispersion for 5 min; and
(3) theabove components A and B were evenly mixed in a weight ratio of 1:0.37 at room temperature to form the paint.

**Comparative example 2** A method for preparing a fluorosilicone modified polyaspartate polyurea coating comprises:
(1) preparation of component Aof paint: 42 parts by weight of fluorosilicone modifiedpolyaspartate resin (Nanjing Lanfeng New Material Technology Co., Ltd), 2 parts by weight of dispersant, 10 parts by weight of pigment, 12 parts by weight of filler, 0.3 part by weight of anti-sagging agent, 3 parts by weight of dehydration agent, 0.2 part by weight of defoamer A and 0.15 part by weight of deformer B were evenly mixed at room temperatureand then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A, 1 part by weight of light stabilizer B and 6 parts by weight of butyl acetate were further added and then underwent high-speed dispersion for 10 min;
(2) preparation of component B of paint: 9.5 parts by weight of butyl acetate, 0.5 part by weight of dehydrating agent, 76.5 parts by weight of hexamethylenediisocyanatetrimer (Wanhua Chemical Group Co., Ltd) and 13.5 parts by weight of adhesion promoter were mixed at room temperature and then underwent high-speed dispersion for 5 min; and
(3) theabove components A and B were evenly mixed in a weight ratio of 1:0.29 at room temperature to form the paint.

**Comparative example 3** A method for preparing a fluorosilicone modified polyaspartate polyurea coating comprises:
(1) preparation of component Aof paint: 42 parts by weight of fluorosilicone modifiedpolyaspartate resin (Nanjing Lanfeng New Material Technology Co., Ltd), 2 parts by weight of dispersant, 10 parts by weight of pigment, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A, 1 part by weight of light stabilizer B and 6 parts by weight of butyl acetate were further added and then underwent high-speed dispersion for 10 min;
(2) preparation of component B of paint: 9.5 parts by weight of butyl acetate, 0.5 part by weight of dehydrating agent, 66.5parts by weight of hexamethylenediisocyanatetrimer (Wanhua Chemical Group Co., Ltd), 10parts by weight of amino-terminated dimethicone (Wacker Chemicals (China) Co., Ltd.) and 13.5 parts by weight of adhesion promoter were mixed at room temperature and then underwent high-speed dispersion for 5 min; and
(3) theabove components A and B were evenly mixed in a weight ratio of 1:0.5 at room temperature to form the paint.

**Comparative example 4** A method for preparing a fluorosilicone modified organic antifouling agent-containing polyaspartate polyurea coating comprises:
(1) preparation of component Aof paint: 42 parts by weight of fluorosilicone modifiedpolyaspartate resin (Nanjing Lanfeng New Material Technology Co., Ltd), 2 parts by weight of dispersant, 10 parts by weight of pigment, 10 parts by weight of di(hydroxyethyl) methyl dodecyl ammonium chloride, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A, 1 part by weight of light stabilizer B and 6 parts by weight of butyl acetate were further added and then underwent high-speed dispersion for 10 min;
(2) preparation of component B of paint: 9.5 parts by weight of butyl acetate, 0. 5 part by weight of dehydrating agent, 66.5 parts by weight of polyisocyanate HT600 (Wanhua Chemical Group Co., Ltd.), 10 parts by weight of amino-terminated dimethicone (Wacker Chemicals (China) Co., Ltd.) and 13.5 parts by weight of adhesion promoter were mixed at room temperature and then underwent high-speed dispersion for 5 min;
(3) the above components A and B were evenly mixed in a weight ratio of 1:1.2 at room temperature to form the paint; and
(4) the paint was scrapped onto the substrate of a tinplate at room temperature, wherein the thickness of the coating film was 200 µm, and its properties were tested as follows: activation time was 14 min, the surface dry time at 25°C was 14 min, the hard dry time at 25°C was 30 min, and the hardness was represented by H.

**Comparative example 5** A method for preparing a fluorosilicone modified organic antifouling agent-containing polyaspartate polyurea coating comprises:
(1) preparation of component Aof paint: 42 parts by weight of fluorosilicone modifiedpolyaspartate resin (Nanjing Lanfeng New Material Technology Co., Ltd), 2 parts by weight of dispersant, 20 parts by weight of pigment, 10 parts by weight of polyethylene glycol monomethyl ether, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A, 1 part by weight of light stabilizer B and 6 parts by weight of butyl acetate were further added and then underwent high-speed dispersion for 10 min;
(2) preparation of component B of paint: 9.5 parts by weight of butyl acetate, 0.5 part by weight of dehydrating agent, 66.5 parts by weight of polyisocyanate HT600 (Wanhua Chemical Group Co., Ltd.), 10 parts by weight of amino-terminated dimethicone (Wacker Chemicals (China) Co., Ltd.) and 13.5 parts by weight of adhesion promoter were mixed at room temperature and then underwent high-speed dispersion for 5 min; and
(3) theabove components A and B were evenly mixed in a weight ratio of 1:1.2 at room temperature to form the paint.

**Comparative example 6** A method for preparing a fluorosilicone modified organic antifouling agent-containing polyaspartate polyurea coating comprises:
(1) preparation of component A of paint: 42 parts by weight of fluorosilicone modifiedpolyaspartate resin (Nanjing Lanfeng New Material Technology Co., Ltd), 2 parts by weight of dispersant, 10 parts by weight of pigment, 10 parts by weight of di(hydroxyethyl) methyl dodecyl ammonium chloride, 10 parts by weight of polyethylene glycol monomethyl ether, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A, 1 part by weight of light stabilizer B and 6 parts by weight of butyl acetate were further added and then underwent high-speed dispersion for 10 min;
(2) preparation of component B of paint: 9.5 parts by weight of butyl acetate, 0.5 part by weight of dehydrating agent, 76.5 parts by weight of polyisocyanate HT600 (Wanhua Chemical Group Co., Ltd.) and 13.5 parts by weight of adhesion promoter were mixed at room temperature and then underwent high-speed dispersion for 5 min; and
(3) theabove components A and B were evenly mixed in a weight ratio of 1:1.1 at room temperature to form the paint.

**Example 1** A preparation process of a fluorosilicone modified organic antifouling agent-containing asparagus polyurea resin systemcoating comprises:
(1) preparation of component Aof paint: 48parts by weight of fluorosilicone modifiedpolyaspartate resin (Nanjing Lanfeng New Material Technology Co., Ltd), 2 parts by weight of dispersant, 10 parts by weight of pigment, 5 parts by weight of di(hydroxyethyl) methyl dodecyl ammonium chloride, 5 parts by weight of polyethylene glycol monomethyl ether, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A and 1 part by weight of light stabilizer B were further added and then underwent high-speed dispersion for 10 min;
(2) preparation of component B of paint: 0.5 part by weight of dehydrating agent, 66.5 parts by weight of polyisocyanate HT600 (Wanhua Chemical Group Co., Ltd.), 10 parts by weight of amino-terminated dimethicone (Wacker Chemicals (China) Co., Ltd.)and 13.5 parts by weight of adhesion promoter were mixed at room temperature and then underwent high-speed dispersion for 5 min; and
(3) theabove components A and B were evenly mixed in a weight ratio of 1:1 at room temperature to form the paint.

**Example 2** A preapration process of an organic antifouling agent-containing asparagus polyurearesin system coating provided in this example is basically the same as that in example 1, but the differences are that:
preparation of component A of paint: 48 parts by weight of fluorosilicone modifiedpolyaspartate resin (Nanjing Lanfeng New Material Technology Co., Ltd), 2 parts by weight of dispersant, 10 parts by weight of pigment, 20parts by weight of di(hydroxyethyl) methyl dodecyl ammonium chloride, 10parts by weight of polyethylene glycol monomethyl ether, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A and 1 part by weight of light stabilizer B were further added and then underwent high-speed dispersion for 10 min;
preparation of component B of paint: 0.5 part by weight of dehydrating agent, 66.5 parts by weight of polyisocyanate HT600 (Wanhua Chemical Group Co., Ltd.), 10 parts by weight of amino-terminated dimethicone (Wacker Chemicals (China) Co., Ltd.)and 13.5 parts by weight of adhesion promoter were mixed at 60°C and then underwent high-speed dispersion for 5 min;
theabove components A and B were evenly mixed in a weight ratio of 1:1.5at room temperature to form the paint.

**Example 3** A preparation process of an organic antifouling agent-containing asparagus polyurearesin system coating provided in this example is basically the same as that in example 1, but the differences are that:
preparation of component A of paint: 48 parts by weight of fluorosilicone modifiedpolyaspartate resin (Nanjing Lanfeng New Material Technology Co., Ltd), 2 parts by weight of dispersant, 10 parts by weight of pigment, 20parts by weight of di(hydroxyethyl) methyl dodecyl ammonium chloride, 20parts by weight of polyethylene glycol monomethyl ether, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A and 1 part by weight of light stabilizer B were further added and then underwent high-speed dispersion for 10 min;
preparation of component B of paint: 0.5 part by weight of dehydrating agent, 66.5 parts by weight of polyisocyanate HT600 (Wanhua Chemical Group Co., Ltd.), 10 parts by weight of amino-terminated dimethicone (Wacker Chemicals (China) Co., Ltd.)and 13.5 parts by weight of adhesion promoter were mixed at 60°C and then underwent high-speed dispersion for 5 min;
the above components A and B were evenly mixed in a weight ratio of 1:2 at room temperature to form the paint

**Example 4** A preparation process of an organic antifouling agent-containing asparagus polyurearesin system coating provided in this example is basically the same as that in example 1, but the differences are that:
preparation of component A of paint: 48 parts by weight of fluorosilicone modifiedpolyaspartate resin (Nanjing Lanfeng New Material Technology Co., Ltd), 2 parts by weight of dispersant, 10 parts by weight of pigment, 30parts by weight of di(hydroxyethyl) methyl dodecyl ammonium chloride, 30parts by weight of polyethylene glycol monomethyl ether, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A and 1 part by weight of light stabilizer B were further added and then underwent high-speed dispersion for 10 min;
preparation of component B of paint: 0.5 part by weight of dehydrating agent, 66.5 parts by weight of polyisocyanate HT600 (Wanhua Chemical Group Co., Ltd.), 10 parts by weight of amino-terminated dimethicone (Wacker Chemicals (China) Co., Ltd.)and 13.5 parts by weight of adhesion promoter were mixed at 65°C and then underwent high-speed dispersion for 5 min;
theabove components A and B were evenly mixed in a weight ratio of 1:3 at room temperature to form the paint.

**Example 5** A preparation process of an organic antifouling agent-containing asparagus polyurearesin system coating provided in this example is basically the same as that in example 1, but the differences are that:
preparation of component A of paint: 48 parts by weight of polyaspartate resin (Nanjing Lanfeng New Material Technology Co., Ltd), 2 parts by weight of dispersant, 10 parts by weight of pigment, 10 parts by weight of 4-bromo-2-(4-chlorophenyl)-5-(trifluoromethyl)-1H pyrrole-3-carbonitrile (Econea), 10 parts by weight of polyethylene glycol monomethyl ether, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silanecoupling agent, 0.15 part by weight of rheological additive, 2 parts by weight of light stabilizer A and 1 part by weight of light stabilizer B were further added and then underwent high-speed dispersion for 10 min;
preparation of component B of paint: 0.5 part by weight of dehydrating agent, 66.5 parts by weight of polyisocyanate HT600 (Wanhua Chemical Group Co., Ltd.), 10 parts by weight of amino-terminated dimethicone (Wacker Chemicals (China) Co., Ltd.)and 13.5 parts by weight of adhesion promoter were mixed at 60°C and then underwent high-speed dispersion for 5 min;
theabove components A and B were evenly mixed in a weight ratio of 1: 1.5 at room temperature to form the paint.

**Example 6** A preparation process of an organic antifouling agent-containing asparagus polyurearesin system coating provided in this example is basically the same as that in example 1, but the differences are that:
preparation of component A of paint: 48 parts by weight of silicon-containng polyaspartate resin (Nanjing Lanfeng New Material Technology Co., Ltd), 2 parts by weight of dispersant, 10 parts by weight of pigment, 10 parts of N-(2,4,6-trichlorophenyl) maleimide (TCM), 10 parts by weight ofpolyethylene glycol monomethyl ether, 12 parts by weight of filler, 0.3 part by weight of anti-sagging agent, 3 parts by weight of dehydration agent, 0.2 part by weight of defoamer A and 0.15 part by weight of deformer B were evenly mixed at about 40°C and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A and 1 part by weight of light stabilizer B were further added and then underwent high-speed dispersion for 10 min;
preparation of component B of paint: 0.5 part by weight of dehydrating agent, 66.5 parts by weight of polyisocyanate HT600 (Wanhua Chemical Group Co., Ltd.), 10 parts by weight of amino-terminated dimethicone (Wacker Chemicals (China) Co., Ltd.)and 13.5 parts by weight of adhesion promoter were mixed at 80°C and then underwent high-speed dispersion for 5 min;
theabove components A and B were evenly mixed in a weight ratio of 1:1.5 at about 40°Cto form the paint.

**Example 7** A preparation process of an organic antifouling agent-containing asparagus polyurea resin system coatingprovided in this example is basically the same as that in example 1, but the differences are that:
preparation of component A of paint: 48 parts by weight of fluorine-containng polyaspartate resin (Nanjing Lanfeng New Material Technology Co., Ltd), 2 parts by weight of dispersant, 20 parts by weight of pigment, 0.1 part by weight of medetomidine, 10 parts by weight of polyethylene glycol monomethyl ether, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A and 1 part by weight of light stabilizer B were further added and then underwent high-speed dispersion for 10 min;
preparation of component B of paint: 0.5 part by weight of dehydrating agent, 66.5 parts by weight of polyisocyanate HT600 (Wanhua Chemical Group Co., Ltd.), 10 parts by weight of amino-terminated dimethicone (Wacker Chemicals (China) Co., Ltd.), 10 parts by weight of mino-terminated dimethyl silicone oil (WACKER CHEMICAL (China) Co., Ltd.)and 13.5 parts by weight of adhesion promoter were mixed at 60°C and then underwent high-speed dispersion for 5 min;
theabove components A and B were evenly mixed in a weight ratio of 1:1.2 at about 50°Cto form the paint.

**Example 8** A preparation process of an organic antifouling agent-containing asparagus polyurea resin system coating provided in this example is basically the same as that in example 1, but the differences are that:
preparation of component A of paint: 48 parts by weight of polyaspartate resin (Nanjing Lanfeng New Material Technology Co., Ltd), 2 parts by weight of dispersant, 20 parts by weight of pigment, 10 parts by weight of copper pyrithione, 10 parts by weight of polyethylene glycol monomethyl ether, 12 parts by weight of filler, 0.3 part by weight of anti-sagging agent, 3 parts by weight of dehydration agent, 0.2 part by weight of defoamer A and 0.15 part by weight of deformer B were evenly mixed at room temperature and then underwent high-speed dispersion for 30 min at the dispersion speed of 1500 r/min, then the above mixture obtained by dispersion was grinded to a fineness of less than 30 µm, and subsequently 0.1 part by weight of leveling agent A, 0.1 part by weight of leveling agent B, 1 part by weight of silane coupling agent, 0.15 part by weight of rheological additive, 2 parts by weight of light stabilizer A and 1 part by weight of light stabilizer B were further added and then underwent high-speed dispersion for 10 min;
preparation of component B of paint: 0.5 part by weight of dehydrating agent, 66.5 parts by weight of polyisocyanate HT600 (Wanhua Chemical Group Co., Ltd.), 10 parts by weight of amino-terminated dimethicone (Wacker Chemicals (China) Co., Ltd.)and 13.5 parts by weight of adhesion promoter were mixed at 60°C and then underwent high-speed dispersion for 5 min;
theabove components A and B were evenly mixed in a weight ratio of 1:1.5 at room temperature to form the paint.

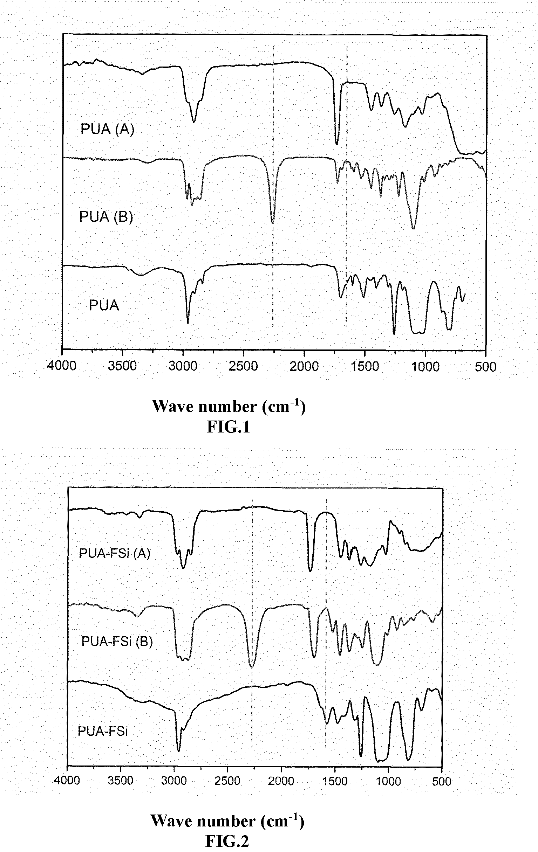

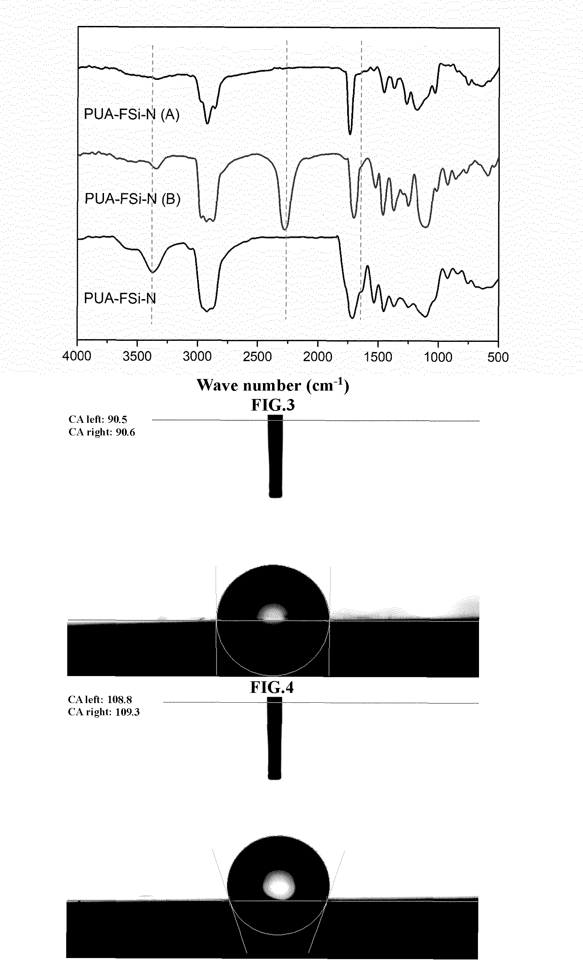

The coatings prepared in comparative example 1, comparative example 2 and example 1 were composed of unmodified polyureaPUA, fluorosiliconemodifiedpolyureaPUA-FSi and organic antifouling agent-containing polyureaPUA-FSi-N respectively. Their infrared spectrums are as shown in Fig.1, Fig.2 and Fig.3 respectively. In Fig.1, PUA (A) is an unmodified asparagus polyurea resin, PUA (B) is an unmodified asparagus polyurea resin curing agent, and PUA is formed by mixing and curing PUA (A) with PUA (B) and completely curing the obtained mixture. In Fig.2, PUA-FSi (A) is fluorosiliconemodified asparagus polyurea resin, PUA(B) is a fluorosilicone modified asparagus polyurea resin curing agent, and PUA is formed by mixing PUA-FSi (A) with PUA (B) and completely curing the obtained mixture. In Fig.3, PUA-FSi-N (A) is fluorosilicone modified asparagus polyurea resin, PUA-FSi-N (B) is a fluorosilicone modified asparagus polyurea resin curing agent, and PUA-FSi-N is formed by mixing PUA-FSi-N (A) with an organic quaternary ammonium salt and PUA-FSi-N (B) and then curing the obtained mixture. It can be seen from Fig.1-Fig.3 that the characteristic peak υ-_{NCO} = 2267 cm⁻¹ of each of the obtained coatings completely disappears after being cured for 3 days, and the characteristic peak υ-_{NH}= 1658 cm⁻¹ of the urea bond occurs, proving that the coatings are completely cured.

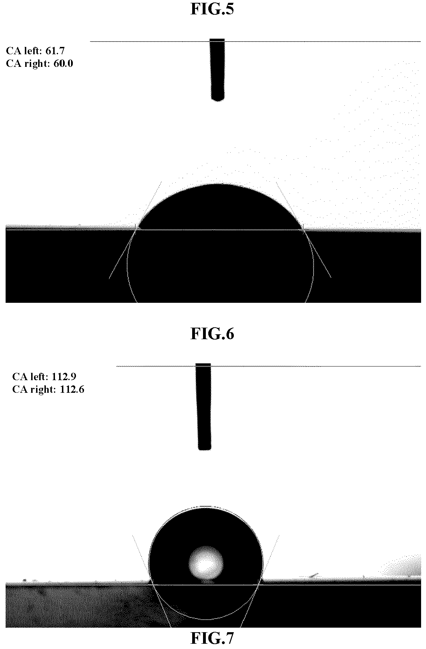

Fig.4, Fig.5 and Fig.6 respectively show water contact angle pictures of coatings prepared in comparative example 1, comparative example 2 and example 1. As a control, antifouling coatings are also formed by utilizing a commercially available organic silicon antifouling paint according to the conditions in example 1, and their water contact angle pictures are as shown in Fig.7. It can be seen that the water contact angle of the fluorosilicone modifiedpolyureaPUA-FSi is increased from 90.5° of the unmodifiedpolyurea to 108.8°, which is close to the water contact angle 112.9° of the organic silicon antifouling coating (PDMS coating) formed by the commercially available organic silicon antifouling paint, indicating that the fluorosilicone modifiedpolyureaPUA-FSi is a low-surface-energy coating having excellent performance. The water contact angle of the organic antifouling agent-containing polyureaPUA-FSi grafted with an antifouling group is reduced from 108.8° to 61.7°, indicating that on the basis of fluorosilicone modifiedpolyureaPUA-FSi, a layer of hydrophilic hydrogel is formed on the surface of the coating, which also reflects that the organic antifouling agent is enriched on the surface of the coating.

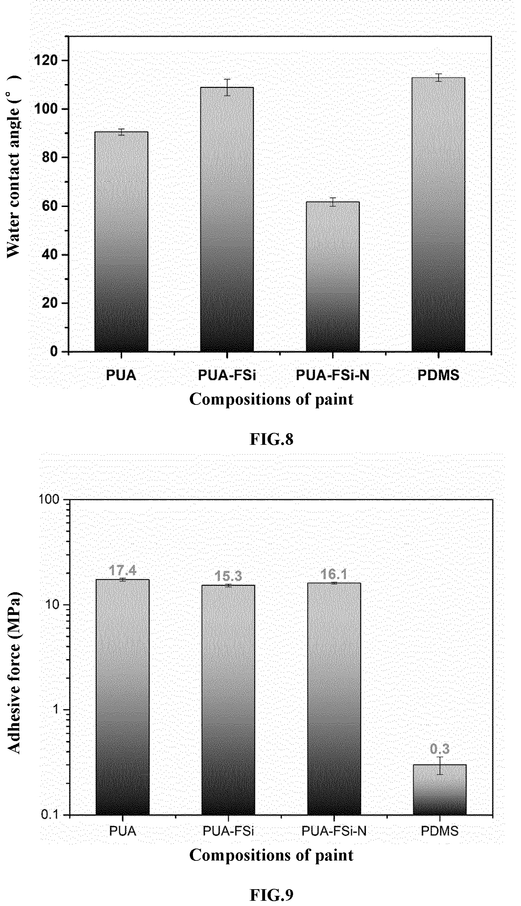

Further, test results of the water contact angles of the above-mentioned unmodified polyureaPUA-FSi, fluorosilicone modifiedpolyureaPUA-FSi, organic antifouling agent-containing polyureaPUA-FSi-N coating andthe organic silicon antifouling coating (PDMS) formed by the commercially available organic silicon paint can also refer to Fig.8.

Fig.9 shows performance comparison of adhesions of the above-mentioned unmodified polyureaPUA-FSi, fluorosilicone modifiedpolyureaPUA-FSi and organic antifouling agent-containing polyureaPUA-FSi-N coating and an epoxy primer. It can be seen that the organic antifouling agent-containing polyureaPUA-FSi-N coating and the epoxy primer have excellent adhesion which is 50 times that of the organic silicon antifouling coating without linkage paint, thereby reducing procedures for actual construction and further lowering the cost of construction.

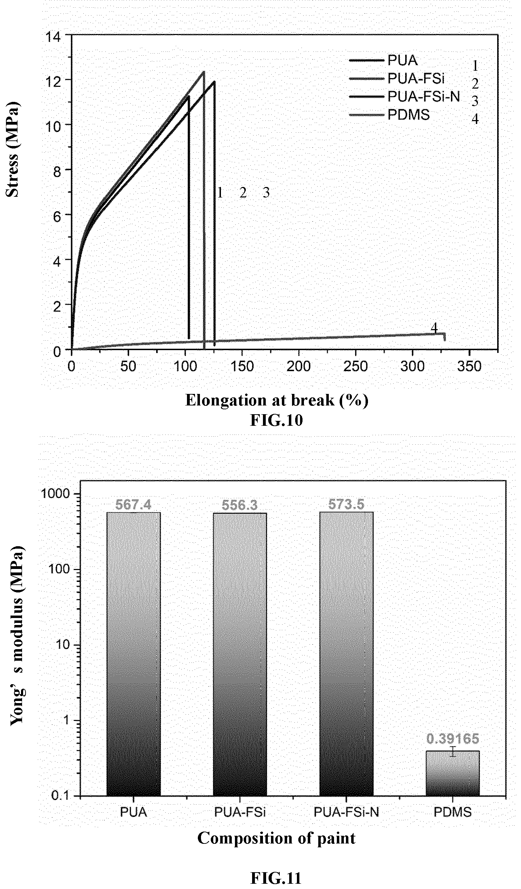

Fig. 10 and Fig. 11 respectively show comparison of mechanical properties such as stress-strain and Yong's modulus of the above-mentioned unmodified polyureaPUA, fluorosilicone modifiedpolyureaPUA-FSi, organic antifouling agent-containing PUA-FSi-N coatings and a PDMS coating. It can be seen from figures that the organic antifouling agent-containing PUA-FSi-N coating has excellent mechanical property, and has the Yong's modulus that is 1400 times that of the PDMS coating, thereby greatly enhancing the anti-scrapping ability of the coating.

The paint obtained in above-mentioned comparative example 1-comparative example 5 and example 1-example 8 and the properties of the coatings formed by the paint are respectively seen in Table 1 and Table 2 below.

**Table 1 Property of paint**

| **Number** | **Viscosity (mpa.s/25°C)** | **Storage stability** | **Solidcontent (%)** | **Odor** |
|---|---|---|---|---|
| Comparative example 1 | 1500 | General | 88±2 | Characteristic odor |
| Comparative example 2 | 1500 | General | 88±2 | Characteristic odor |
| Comparative example 3 | 1500 | General | 88±2 | Characteristic odor |
| Comparative example 4 | 1500 | General | 88±2 | Characteristic odor |
| Comparative example 5 | 1500 | General | 88±2 | Characteristic odor |
| Comparative example 6 | 1500 | General | 88±2 | Characteristic odor |
| Example 1 | 2300 | Good | 98±2 | No irritating odor |
| | | | | No irritating odor |
| Example 2 | 2400 | Good | 98±2 | No irritating odor |
| Example 3 | 2300 | Good | 98±2 | No irritating odor |
| Example 4 | 2300 | Good | 98±2 | No irritating odor |
| Example 5 | 2200 | Good | 98±2 | No irritating odor |
| Example 6 | 2200 | Good | 98±2 | No irritating odor |
| Example 7 | 2300 | Good | 98±2 | No irritating odor |
| Example 8 | 2300 | Good | 98±2 | No irritating odor |

**Table 2 Property of coating**

| | **Surface Drytime (25°C)** | **Hard dry time (25°C)** | **Elongation at break(%)** | **Water contact angle (° )** | **Surface energy (mN/m)** | **Wearing resistance (750g/500r)/mg** | **Chemical Medium resistance** | **Antifouling performance (12-month marine organism coverage area in rafttesting %)** |
|---|---|---|---|---|---|---|---|---|
| Comparative example 1 | 1h | 24h | 105 | 85 | 43 | 33 | Flawless film, no blisters | 99 |
| Comparative example2 | 1h | 24h | 121 | 94 | 38 | 30 | Flawless film, blisters | 98 |
| Comparative examples | 1h | 24h | 135 | 113 | 30 | 28 | Flawless film, blisters | 98 |
| Comparative example4 | 0.5h | 6h | 150 | 101 | 32 | 25 | Flawless film, blisters | 80 |
| Comparative examples | 2h | 24h | 158 | 100 | 33 | 22 | Flawless film, blisters | 85 |
| Comparative example6 | 1h | 24h | 180 | 82 | 30 | 23 | Flawless film, blisters | 30 |
| Example 1 | 1h | 12h | 150 | 99 | 32 | 15 | Flawless film, no blisters | 10 |
| Example 2 | 0.5 h | 6h | 180 | 82 | 30 | 10 | Flawless film, no blisters | ≤ 1 |
| Examples | 0.3 h | 4h | 190 | 50 | 29 | 13 | Flawless film, no blisters | ≤ 1 |
| Example4 | 0.1 h | 2h | 200 | 34 | 28 | 18 | Flawless film, no blisters | ≤1 |
| Examples | 1h | 12h | 150 | 95 | 32 | 20 | Flawless film, no blisters | 10 |
| Example6 | 1h | 12h | 148 | 93 | 33 | 19 | Flawless film, no blisters | 15 |
| Example7 | 1h | 12h | 160 | 89 | 30 | 17 | Flawless film, no blisters | 5 |
| Examples | 1h | 12h | 140 | 91 | 32 | 18 | Flawless film, no blisters | 10 |

Performance test methods of each paint and each coating prepared in each example and each comparative example are implemented by referring to China National Standard GB/T 6822-2014 and HG/T 3831-2006. Wherein, test item "chemical medium resistance" in Table 2 includes: salt resistance 240 h (3% NaCl solution), alkaline resistance 240 h (5% NaOH solution), acid resistance 240 h (5% H₂SO₄ solution), and water resistance 30 days (25°C).

**Example 9** A synthesis method of an asparagus polyurea resin system having a marine antifouling function comprises: 66.5 parts by weight of polyisocyanate HT600 (Wanhua Chemical Group Co., Ltd.) and 10 parts by weight of amino-terminated dimethyl silicone oil (WACKER CHEMICAL (China) Co., Ltd.) were mixed at room temperature and then underwent high-speed dispersion for 5 min, then 42 parts by weight of fluorosilicone modifiedpolyaspartate resin (Nanjing Lanfeng New Material Technology Co., Ltd), 5 parts by weight of di(hydroxyethyl)methyldodecylammonium chloride and 5 parts by weight of polyethylene glycol monomethyl ether were added and continued high-speed dispersion for 10 min to obtain a target product. The infrared spectrum of the target product is similar to that of PUA-FSi-N in example 1.

**Example 10** A synthesis method of an asparagus polyurea resin system having a marine antifouling function comprises: 66.5 parts by weight of polyisocyanate HT600 (Wanhua Chemical Group Co., Ltd.) and 10 parts by weight of amino-terminated dimethyl silicone oil (WACKER CHEMICAL (China) Co., Ltd.) were mixed at 60°C and then underwent high-speed dispersion for 5 min, and then the obtained reaction product was mixed with 42 parts by weight of fluorosilicone modifiedpolyaspartate resin (Nanjing Lanfeng New Material Technology Co., Ltd), 10parts by weight of di(hydroxyethyl)methyldodecylammonium chloride and 10parts by weight of polyethylene glycol monomethyl ether at room temperature, and continued high-speed dispersion for 30 min to obtain a target product.

**Example 11** A synthesis method of an asparagus polyurea resin system having a marine antifouling function comprises: 66.5 parts by weight of polyisocyanate HT600 (Wanhua Chemical Group Co., Ltd.) and 10 parts by weight of amino-terminated dimethyl silicone oil (WACKER CHEMICAL (China) Co., Ltd.) were mixed at 80°C and then underwent high-speed dispersion for 5 min, and then the obtained reaction product was mixed with 42 parts by weight of polyaspartate resin (Nanjing Lanfeng New Material Technology Co., Ltd), 10 parts by weight of4-bromo-2-(4-chlorophenyl)-5-(trifluoromethyl)-1H pyrrole-3-carbonitrile (Econea) and 10 parts by weight of polyethylene glycol monomethyl ether at room temperature, and the obtained mixture continued high-speed dispersion for 30 min to obtain a target product.

**By** testingvarious performances of the target products obtained in examples 9-11 based on the methods in examples 1-8, it is found that the target product has good exhibition in the aspects of elongation at break, water contact angle, surface energy, wear resistance, antifouling performance and other properties.

The above descriptions are only preferred embodiments of the present application but not limiting the present application. It should be noted that several improvements and deformations can also be made by persons of ordinary skill in the art without departing from the technical principle of the present application, and these improvements and deformations should also be deemed as the protective scope of the present application.

## Claims

1. An asparagus polyurea resin system having a marine antifouling function, comprising a polymer having a structure represented by the following formula: 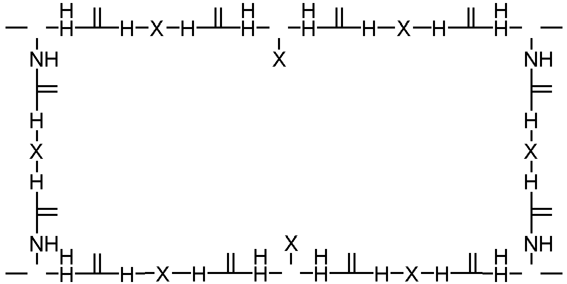 wherein, X is derived from polyaspartate, Y is derived from an isocyanate curing agent, and R is a group having an antibacterial and antifouling function.

2. An asparagus polyurea resin system having a marine antifouling function, wherein theasparagus polyurea resin system is mainly formed by reaction of a polyaspartate resin, an organic antifouling agent, a polyether, a polyisocyanateand a silicone resin.

3. The asparagus polyurea resin system having a marine antifoulingfunction according to claim 2, wherein:
the polyaspartate resin comprises a combination of any one or more of a polyaspartate resin,a fluorine-containing polyaspartate resin, a silicon-containing polyaspartate resin and a fluorosilicone-containing modified polyaspartate resin;
and/or, the organic antifouling agent comprises a combination of any one or more of 4-bromo-2-(4-chlorophenyl)-5-(trifluoromethyl)-1H pyrrole-3-carbonitrile, 4-bromo-2-(4-chlorophenyl)-5-(trifluoromethyl)-1H pyrrole-3-carbonitrile derivatives, N-(2,4,6-trichlorophenyl)maleimide, copper pyrithione, zinc pyrithione, medetomidine, medetomidine derivatives, butyrolactone, butyrolactone derivatives, alkyldimethylbenzyl quaternary ammonium salts, trimethoxysilylpropyl-N,N,N-trimethyl ammonium chloride, tetradecyldimethyl(3-trimethoxysilylpropyl) ammonium chloride, tetradecyldimethyl(3-trimethoxysilylpropyl)ammonium chloride, octadecyldimethyl(3-trimethoxysilylpropyl) ammonium chloride, di(hydroxyethyl)methyldodecylammonium chloride, di(hydroxyethyl)methyltetradecylammonium chloride, di(2-hydroxyethyl)methyltetradecylchlorinated quaternary ammonium salts and di(2-hydroxyethyl)methyltetradecylchlorinated quaternary ammonium salts;
and/or, the polyether comprises a combination of any one or more of polyethylene glycol, polyethylene glycol monomethyl ether, polyethylene glycol) methyl ether amine, polypropylene glycol, polypropylene glycol monomethyl ether and polyether amine;
and/or, the silicone resin comprises a combination of any one or more of the following compounds: 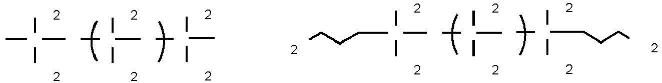 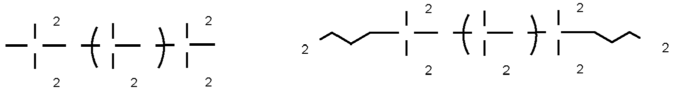
wherein, n is 10-1000;
and/or, the polyisocyanate comprises a combination of any one or more of a hexamethylenediisocyanatetrimer, a fluorosilicone modified hexamethylenediisocyanatetrimer, L-lysine triisocyanate, fluorosilicone modified L-lysine triisocyanate, triphenylmethanetriisocyanate and fluorosilicone modified triphenylmethanetriisocyanate.

4. A paint composition, comprising the asparagus polyurea resin system according to any one of claims 1-3.

5. The paint compositionaccording to claim 4, wherein, the asparagus polyurea resin system accounts for 0.5%-99% of the dry film weight of the paint composition; or, the mass sum of the asparagus polyurea resin system and one or more antifouling agents accounts for 0.5%-99% of the dry film weight of the paint composition; and/or, the paint composition is a solvent-free system.

6. A paint composition, comprising the following raw materials: 0-80 parts by weight of polyaspartateresin, 0-50 parts by weight of organic antifouling agent, 0-50 parts by weight of polyether, 0-80 parts by weight of silicone resin and 20-100 parts by weight of polyisocyanate; wherein, the amounts of the polyaspartateresin, the polyether and the silicone resin are all more than 0.

7. The paint composition according to claim 6, wherein the polyaspartateresin has the following structure: 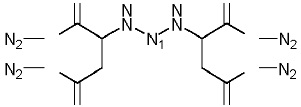 wherein, R₁ is selected from aliphatic groups, preferably C1-C100 aliphatic groups, and R₂ is selected from fluorine-containing or silicon-containing hydrocarbyl, preferably C1-C100 fluorine-containing or silicon-containing hydrocarbyl.

8. The paint composition according to claim 6, wherein,
the polyaspartate resin comprises a combination of any one or more of a polyaspartate resin, a fluorine-containing polyaspartate resin, a silicon-containing polyaspartate resin and a fluorosilicone-containing modified polyaspartate resin;
and/or, the organic antifouling agent comprises a combination of any one or more of 4-bromo-2-(4-chlorophenyl)-5-(trifluoromethyl)-1H pyrrole-3-carbonitrile, 4-bromo-2-(4-chlorophenyl)-5-(trifluoromethyl)-1H pyrrole-3-carbonitrile derivatives, N-(2,4,6-trichlorophenyl)maleimide, copper pyrithione, zinc pyrithione, medetomidine, medetomidine derivatives, butyrolactone, butyrolactone derivatives, alkyldimethylbenzyl quaternary ammonium salts, trimethoxysilylpropyl-N,N,N-trimethyl ammonium chloride, tetradecyldimethyl(3-trimethoxysilylpropyl) ammonium chloride, tetradecyldimethyl(3-trimethoxysilylpropyl)ammonium chloride, octadecyldimethyl(3-trimethoxysilylpropyl) ammonium chloride, di(hydroxyethyl)methyldodecylammonium chloride, and di(hydroxyethyl)methyltetradecylammonium chloridedi(2-hydroxyethyl)methyltetradecylchlorinated quaternary ammonium salts;
and/or, the polyether comprises a combination of any one or more of polyethylene glycol, polyethylene glycol monomethyl ether, polyethylene glycol) methyl ether amine, polypropylene glycol, polypropylene glycol monomethyl ether and polyether amine;
and/or, the silicone resin comprises a combination of any one or more of the following compounds: 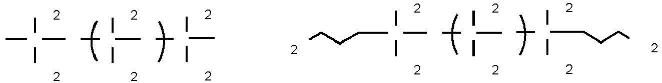 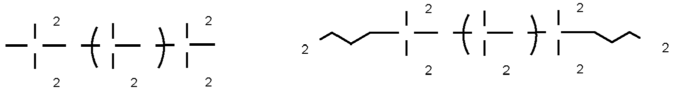
wherein, n is 10-1000;
and/or, the polyisocyanate comprises a combination of any one or more of a hexamethylenediisocyanatetrimer, a fluorosilicone modified hexamethylenediisocyanatetrimer, L-lysine triisocyanate, fluorosilicone modified L-lysine triisocyanate, triphenylmethanetriisocyanate and fluorosilicone modified triphenylmethanetriisocyanate.

9. The paint compositionaccording to claim 6, also comprising a combination of any one or more of a filler and an additive; and/or, the paint composition is a solvent-free system.

10. The paint composition according to claim 9, wherein,
the paint composition also comprises the following raw materials: 0-50 parts by weight of filler and 0-20 parts by weight of additive;
and/or, the filler comprises a combination of any one or more of iron yellow, barium sulfate, titanium dioxide, micro-silicon powder, talc powder and heavy calcium carbonate;
and/or, the additive comprises a combination of any one or more of a leveling agent, a defoamer, a dispersant, a thickening agent, a coupling agent and activated powder.

11. A method for preparing a paint composition, comprising:
preparing raw materials according to raw material compositions of the paint composition according to any one of claims 6-10; and
mixingpolyaspartate with a silicone resin and then reacting the obtained mixture at 0-80°C in a protective atmosphere, subsequently, evenly mixing the obtained reaction product with other raw materials to form the paint composition.

12. A coating formed by the paint composition according to any one of claims 4-10.
